Europäisches Patentamt

European Patent Office

Office européen des brevets

(11) Veröffentlichungsnummer: **0 203 273**
**B1**

(12) **EUROPÄISCHE PATENTSCHRIFT**

(45) Veröffentlichungstag der Patentschrift:
**11.05.88**

(21) Anmeldenummer: **86102632.6**

(22) Anmeldetag: **28.02.86**

(51) Int. Cl.⁴: **B 63 H 21/22**

(54) **System zur Steuerung einer Antriebseinrichtung.**

(30) Priorität: **09.05.85 DE 3516635**

(43) Veröffentlichungstag der Anmeldung:
**03.12.86 Patentblatt 86/49**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**CA - A - 947 619**
**GB - A - 628 296**
**GB - A - 984 321**
**US - A - 3 161 075**
**US - A - 3 224 291**
**US - A - 4 506 752**

(73) Patentinhaber: **VDO Adolf Schindling AG,**
**Gräfstrasse 103, D-6000 Frankfurt/Main (DE)**

(72) Erfinder: **Pfalzgraf, Manfred, Luisenstrasse 24,**
**D-6000 Frankfurt am Main 1 (DE)**

(74) Vertreter: **Klein, Thomas, Dipl.-Ing. (FH), Sodener**
**Strasse 9 Postfach 6140, D-6231 Schwalbach a. Ts. (DE)**

ACTORUM AG

## Beschreibung

Die Erfindung bezieht sich auf ein System zur Steuerung einer Antriebseinrichtung, insbesondere einer Bootsantriebseinrichtung, welche eine Brennkraftmaschine und ein Wendegetriebe umfasst mit einem Bedienelement zur Einstellung der Leistung und der Drehrichtung.

Antriebe für Boote weisen üblicherweise einen Hebel zur Steuerung der Leistung der Brennkraftmaschine und des Wendegetriebes auf. In einer Mittelstellung wird die Motorleistung gedrosselt, so dass sich der Motor im Leerlauf dreht. Wird der Hebel nach vorn bis zur Endstellung bewegt, so steigert sich die Leistung des Motors bis zum Volllastbetrieb, wobei das Wendegetriebe in Vorwärts-Richtung geschaltet ist. Bei einer Bewegung des Hebels nach hinten wird die Leistung der Brennkraftmaschine ebenfalls gesteigert, während jedoch das Getriebe beim Verlassen der Ruhestellung in die andere Drehrichtung geschaltet wird. Ein solches System ist z.B. aus der US-A-3 224 291 bekannt und entspricht dem Oberbegriff des Anspruchs 1. Diese bekannten Steuerungseinrichtungen weisen den Nachteil auf, dass durch zu schnelles Umschalten zwischen einer höheren Drehzahl in Vorwärts-Richtung und der entgegengesetzten Drehrichtung erhebliche Beschädigungen von Teilen des gesamten Antriebsstranges des Bootes, also des Getriebes, der Brennkraftmaschine, der Schraubenwelle und der Schraube selbst, erfolgen können.

Aufgabe der vorliegenden Erfindung ist es, ein System zur Steuerung einer Antriebseinrichtung anzugeben, welches derartige Schäden vermeidet und trotzdem einfach zu bedienen ist.

Die Aufgabe wird erfindungsgemäss dadurch gelöst, dass das Bedienelement der Leistung und der Drehrichtung entsprechende elektrische Signale an eine einen Mikrocomputer enthaltende Steuereinrichtung leitet, dass an die Steuereinrichtung je ein Stellglied für die Leistung der Brennkraftmaschine und für die Umschaltung des Wendegetriebes angeschlossen ist und dass die Steuereinrichtung derart ausgebildet ist, dass die Umschaltung des Wendegetriebes nur möglich ist, wenn die Drehzahl der Brennkraftmaschine unterhalb eines vorgegebenen Wertes liegt.

Das erfindungsgemässe System weist den Vorteil auf, dass eine Beschädigung des Antriebes durch Falschschaltungen vermieden wird und dass trotzdem eine einfache Einstellung von Geschwindigkeit und Fahrtrichtung mit Hilfe eines Hebels möglich ist. Wenn die Bedienungsperson den Hebel sehr schnell von einer Vorwärts-Stellung in eine Rückwärts-Stellung bringt, so wird die Umschaltung des Getriebes und das Beschleunigen der Brennkraftmaschine nach der Umschaltung lediglich etwas verzögert, wovon in der Regel die Bedienungsperson kaum etwas merken wird.

Eine vorteilhafte Ausgestaltung der Erfindung besteht darin, dass die Steuereinrichtung für beide Stellglieder eine gemeinsame Endstufe und einen Umschalter umfasst. Dadurch wird eine relativ teure Endstufe für das zweite Stellglied eingespart.

Der Umschalter kann mit Hilfe eines einfachen Relais verwirklicht werden.

Eine weitere Ausgestaltung der Erfindung sieht vor, dass ohne die Zuführung elektrischer Spannung das Stellglied für die Leistung der Brennkraftmaschine durch Federkraft in der Leerlaufstellung und das Stellglied für das Wendegetriebe in der jeweils vorhandenen Stellung gehalten wird. Dadurch ist sichergestellt, dass das jeweilige Stellglied bei Umschaltung der Endstufe auf das andere Stellglied in derjenigen Stellung gehalten wird, welche Voraussetzung für die Betätigung des anderen Stellgliedes ist.

Die Erfindung lässt zahlreiche Ausführungsformen zu. Eine davon ist schematisch in den Figuren dargestellt und wird nachfolgend beschrieben. Es zeigt:

Fig. 1 ein Blockschaltbild des Ausführungsbeispiels,

Fig. 2 Spannungszeitdiagramme zur Erläuterung des Blockschaltbildes nach Fig. 1, und

Fig. 3 einen Ausschnitt aus dem Blockschaltbild nach Fig. 1 in etwas detaillierterer Darstellung.

Gleiche Teile sind in den Figuren mit gleichen Bezugszeichen versehen.

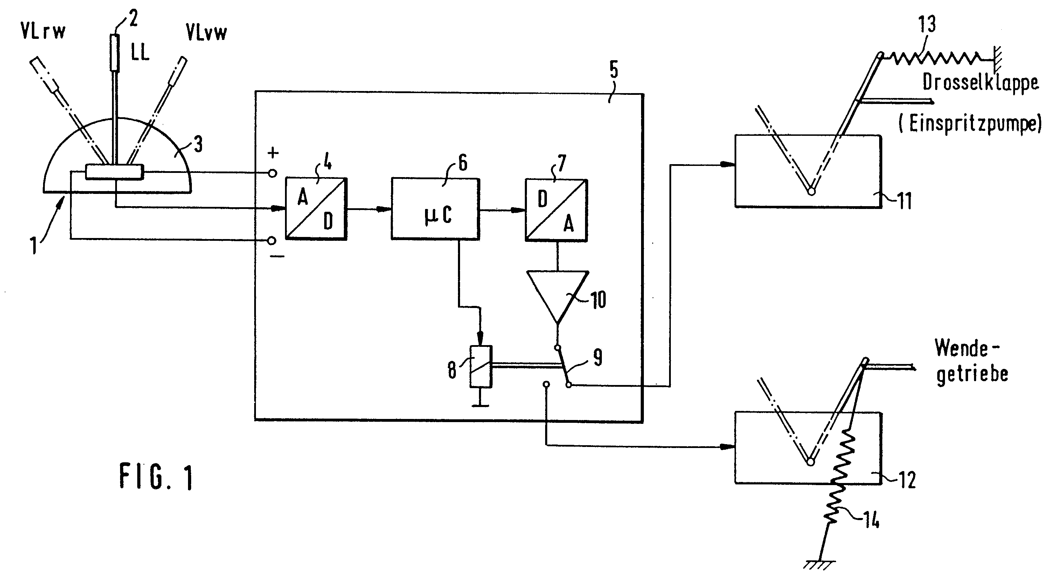

In Fig. 1 stellt 1 das Bedienelement dar, welches einen Hebel 2 umfasst, der in einer mittleren Stellung den Leerlauf der Brennkraftmaschine und in den beiden Endstellungen die volle Leistung der Brennkraftmaschine bewirkt. Je nach Auslenkung des Hebels 2 wird ein Wendegetriebe umgeschaltet. Bei dem Ausführungsbeispiel nach Fig. 1 ist der Hebel 2 mit dem Schleifer eines Potentiometers 3 gekoppelt. Die Enden der Widerstandsbahn des Potentiometers 3 sind jeweils an eine positive und negative Betriebsspannung angeschlossen, während der Schleifer des Potentiometers 3 den Ausgang des Bedienelements bildet und an einen Analog-Digital-Wandler 4 innerhalb einer Steuereinrichtung 5 angeschlossen ist. Sind die positive und die negative Betriebsspannung ihrem Betrag nach gleich, so ergibt sich, dass der Betrag der dem Analog-Digital-Wandler 4 zugeführten Spannung der jeweils eingestellten Leistung der Brennkraftmaschine und das Vorzeichen der Spannung der Stellung des Wendegetriebes entspricht.

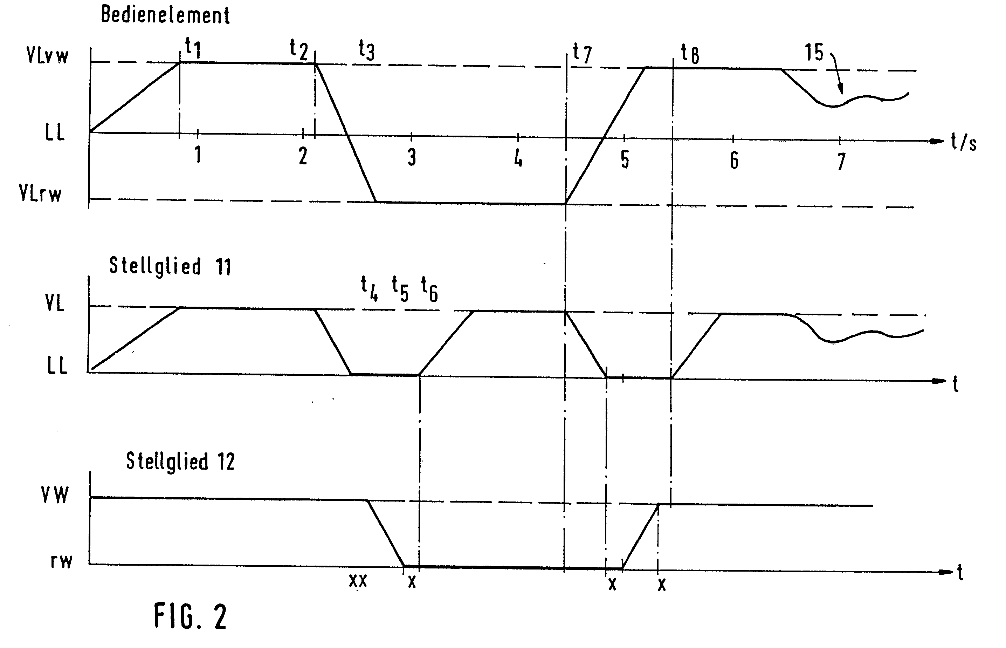

Die Ausgangssignale des Analog-Digital-Wandlers werden einem Mikrocomputer 6 zugeführt, in welches ein im Zusammenhang mit Fig. 2 kurz erläutertes Programm eingeschrieben ist. An Ausgänge des Mikrocomputers 6 ist ein Digital-Analog-Wandler 7 und die Wicklung 8 eines Relais 9 angeschlossen. Die Ausgangsspannung des Digital-Analog-Wandlers 7 wird über eine Endstufe 10 und die Umschaltkontakte des Relais 9 entweder einem Stellglied 11 zur Regulierung der Motorleistung oder einem Stellglied 12 zur Umschaltung des Wendegetriebes zugeführt. Sowohl die Brennkraftmaschine als auch das Wendegetriebe sind nicht dargestellt, da sie zum Verständnis der Erfindung nicht näher erläutert zu werden brauchen. Die Leistung der Brennkraftmaschine kann durch Verstellung einer Drosselklappe oder einer Einspritzpumpe je nach Art der Brennkraftmaschine verstellt werden.

Gemäss einer Weiterbildung der Erfindung sind die Stellglieder 11, 12 mit je einer Speichereinrichtung versehen, welche im Falle des Stellgliedes 11 die Leerlaufstellung und im Falle des Stellgliedes 12 die jeweils vorhandene Stellung speichert, wenn keine Steuerspannung von der Steuereinrichtung 5 zugeführt wird. In Fig. 1 sind die Stellungsspeicher durch Schraubenfedern 13, 14 schematisch dargestellt. Die Stellglieder 11, 12 enthalten ferner Stellungsgeber, deren Ausgänge mit entsprechenden Eingängen des Mikrocomputers 6 verbunden sind, so dass eine Rückmeldung des Ist-Wertes der Stellung erfolgt.

Die Funktion des in Fig. 2 gezeigten Systems wird nun an Hand der Diagramme nach Fig. 2 erläutert. Dabei stellt das Diagramm a) die Stellung des Hebels 2 (Fig. 1) und das Diagramm b) die Stellung des Stellgliedes 11 für die Motorleistung dar, während in Diagramm c) die Stellung des Stellgliedes 12 für das Wendegetriebe aufgetragen ist. Der gewählte Zeitmassstab soll lediglich eine Vorstellung der zeitlichen Grössenordnung geben, die bei dem erfindungsgemässen System zu berücksichtigenden Zeiten hängen jedoch stark von der Art, insbesondere der Grösse, der Antriebseinrichtung ab. Während eines ersten Zeitabschnitts $t_o$ bis $t_1$ wird der Hebel 2 von der Mittelstellung in die vordere Endstellung, welche Vollast vorwärts bedeutet, gebracht. Der Mikrocomputer 6 fragt die vom Potentiometer 3 abgegebene Spannung laufend ab und steuert das Stellglied 11 entsprechend. Während dieses Zeitabschnitts befindet sich das Relais 9 in der gezeichneten Stellung, so dass das Stellglied 11 mit der Endstufe 10 verbunden ist. Während dieser Phase und während des nachfolgenden Vollast-Betriebes ist das Stellglied 12 des Wendegetriebes in der Vorwärts-Stellung. Es benötigt dazu keine Steuerspannung von der Endstufe 10.

Von $t_2$ bis $t_3$ wird der Hebel 2 etwa zeitlinear von der Stellung Vollast vorwärts in die Stellung Vollast rückwärts gebracht. Das Stellglied 11 folgt dieser Bewegung bis zum Zeitpunkt $t_3$, wenn der Hebel 2 seine Leerlaufstellung erreicht. Bei dem Beispiel sei angenommen, dass der Hebel so schnell bewegt wird, dass die Drehzahl der Brennkraftmaschine der Hebelbewegung nicht folgt. Es wird deshalb die Umschaltung des Wendegetriebes und die Beschleunigung der Brennkraftmaschine verzögert. Das Stellglied 11 wird vom Mikrocomputer bis zum Zeitpunkt $t_6$ in der Leerlaufstellung gehalten. Zum Zeitpunkt $t_4$ hat die Brennkraftmaschine ihre Leerlaufdrehzahl erreicht. Die Zeit x kann entweder eine vorgegebene Zeit sein, welche die Trägheit des Antriebs berücksichtigt oder je nach vorausgegangener Drehzahl und der Geschwindigkeit der Bewegung des Hebels 2 vom Mikrocomputer errechnet werden, wobei ebenfalls Daten der Antriebseinrichtung zu berücksichtigen sind. Schliesslich kann der Brennkraftmaschine ein Drehzahlsensor zugeordnet sein, so dass die weiteren Vorgänge erst ausgelöst werden, wenn die Leerlaufdrehzahl tatsächlich erreicht ist.

Zum Zeitpunkt $t_4$ schaltet das Relais 9 in die linke Stellung, so dass das Stellglied 12 mit der Endstufe 10 verbunden wird. Der Mikrocomputer 6 steuert danach die Endstufe 10 derart an, dass das Stellglied 12 in die Rückwärts-Position geschaltet wird. Dieser Vorgang ist bei $t_5$ beendet und wird von einem dem Stellglied 12 zugeordneten Stellungsgeber dem Mikrocomputer 6 gemeldet, worauf das Relais 9 wieder in die gezeichnete Stellung umgeschaltet wird. Zum Zeitpunkt $t_6$ wird dann vom Mikrocomputer das Stellglied 11 in die vom Hebel 2 vorgegebene Position gebracht. Zwischen den Zeitpunkten $t_7$ und $t_8$ ist der umgekehrte Schaltvorgang, nämlich von Vollast rückwärts auf Vollast vorwärts dargestellt. Schliesslich wird mit dem weiteren Verlauf der Diagramme a) und b) bei 15 angedeutet, dass das Stellglied 11 beliebigen Auslenkungen des Hebels 2 folgt.

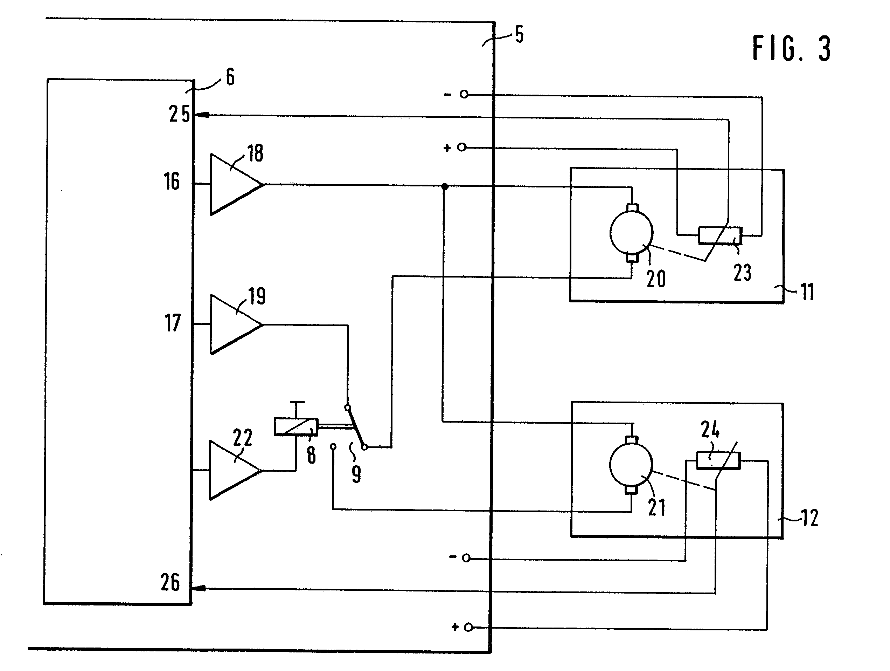

Fig. 3 zeigt ein Ausschnitt des Blockschaltbildes nach Fig. 1 in etwas detaillierterer Darstellung. Der in der Steuereinrichtung 5 enthaltene Mikrocomputer 6 steuert ohne Umweg über einen Analog-Digital-Wandler mit Hilfe zweier digitaler Ausgänge 16 und 17 zwei als Gegentaktschalter aufgebaute Leistungsstufen 18 und 19. In Abhängigkeit des jeweils an ihren Eingängen anliegenden logischen Pegels verbinden die Leistungsstufen 18, 19 ihren Ausgang entweder mit einem positiven oder mit einem negativen Pol der Betriebsspannungsquelle. Die Ausgänge der Leistungsstufen 18, 19 sind mit Hilfe der Umschaltkontakte eines Relais 9 mit Motoren 20, 21 der Stellglieder 11, 12 verbindbar.

Die Spule 8 des Relais 9 wird über eine Endstufe 22 vom Mikrocomputer 6 gesteuert. Liegen an den Ausgängen 16, 17 des Mikrocomputers verschiedene logische Pegel an, so erhält einer der Motoren 20, 21 Betriebsspannung. Die Drehrichtung wird dadurch bestimmt, an welchem der Ausgänge 16, 17 welcher logische Pegel anliegt. Bei gleichen logischen Pegeln an den Ausgängen 16 und 17 erhalten die Motoren keine Betriebsspannung und stehen daher still.

Die Stellglieder 11, 12 sind an sich bekannt und brauchen im Rahmen der Anmeldung nicht näher erläutert zu werden. Dementsprechend sind in den Figuren auch zusätzliche Teile wie Getriebe, Hebel usw. fortgelassen. In jedem der Stellglieder 11, 12 befindet sich ein Potentiometer 23, 24, welches mit dem Motor in Wirkverbindung steht und eine der jeweiligen Stellung des Stellgliedes entsprechende Spannung an den Mikrocomputer 6 abgibt. Hierzu sind die Schleifer der Potentiometer 23, 24 mit Eingängen des Mikrocomputers 25 und 26 verbunden, während die Endkontakte der Widerstandbahnen der Potentiometer 23, 24 mit dem positiven und negativen Pol der Spannungsquelle verbunden sind.

Aus Gründen der Vereinheitlichung wurde bei dem beschriebenen Ausführungsbeispiel für das Wendegetriebe ein gleichartiges Stellglied wie für die Brennkraftmaschine verwendet. Es ist jedoch durchaus im Rahmen des Fachmännischen möglich, ein abweichendes Stellglied für das Wendegetriebe zu verwenden, da bei dem Wendegetriebe nur eine Umschaltung zwischen zwei Endstellungen erforderlich ist, während beim Motor zwischen Leerlauf und Vollast ein möglichst stufenloser Betrieb erforderlich ist. Dementsprechend kann auch beispielsweise das Potentiometer 24 durch Endschalter ersetzt werden.

## Patentansprüche

1. System zur Steuerung einer Antriebseinrichtung, insbesondere einer Bootsantriebseinrichtung, welche eine Brennkraftmaschine und ein Wendegetriebe umfasst, mit einem Bedienelement zur Einstellung der Leistung und der Drehrichtung, wobei das Bedienelement aus einem eine erste Drehrichtung entsprechenden Bereich des Wendegetriebes über eine Ruhestellung in einen einer zweiten Drehrichtung entsprechenden Bereich geschaltet werden kann, *dadurch gekennzeichnet,* dass das Bedienelement (1) der Leistung und der Drehrichtung entsprechende elektrische Signale an eine einen Mikrocomputer (6) enthaltende Steuereinrichtung (5) leitet, dass an die Steuereinrichtung (5) je ein Stellglied (11, 12) für die Leistung der Brennkraftmaschine und für die Umschaltung des Wendegetriebes angeschlossen ist und dass die Steuereinrichtung (5) derart ausgebildet ist, dass die Umschaltung des Wendegetriebes nur möglich ist, wenn die Drehzahl der Brennkraftmaschine unterhalb eines vorgegebenen Wertes liegt.

2. System nach Anspruch 1, *dadurch gekennzeichnet,* dass das Bedienelement (1) einen Hebel (2) umfasst, dessen Mittelstellung dem Leerlauf der Brennkraftmaschine zugeordnet ist, dass nach dem Durchfahren der Mittelstellung das Stellglied (11) für die Leistung in der Leerlaufstellung festgehalten wird und die Umschaltung des Wendegetriebes verzögert wird, bis die Brennkraftmaschine die Leerlaufdrehzahl erreicht hat, und dass nach dem Umschalten des Wendegetriebes das Stellglied (11) für die Leistung in diejenige Stellung gebracht wird, welche der Stellung des Hebels entspricht.

3. System nach Anspruch 2, *dadurch gekennzeichnet,* dass die Verzögerung des Umschaltens des Wendegetriebes für eine vorgegebene Zeit erfolgt.

4. System nach Anspruch 2, *dadurch gekennzeichnet,* dass die Verzögerung des Umschaltens des Wendegetriebes für eine Zeit erfolgt, welche vom Mikrocomputer aufgrund der Eigenschaften der Antriebseinrichtung und der Drehzahl vor dem Durchfahren der Mittelstellung errechnet wird.

5. System nach Anspruch 2, *dadurch gekennzeichnet,* dass das Umschalten des Wendegetriebes so lange verzögert wird, bis ein der Brennkraftmaschine zugeordneter Drehzahlgeber das Erreichen der Leerlaufdrehzahl gemeldet hat.

6. System nach Anspruch 1, *dadurch gekennzeichnet,* dass das Bedienelement (1) ein Potentiometer (3) enthält und die Leistung und Drehzahl als Grösse und Vorzeichen einer Gleichspannung der Steuereinrichtung (5) zuführbar ist.

7. System nach Anspruch 1, *dadurch gekennzeichnet,* dass die Stellglieder (11, 12) mit je einem Stellungsgeber (23, 24) gekoppelt sind, welcher die Stellung des jeweiligen Stellgliedes (11, 12) an die Steuereinrichtung (5) meldet.

8. System nach Anspruch 1, *dadurch gekennzeichnet,* dass für beide Stellglieder (11, 12) in der Steuereinrichtung (5) eine gemeinsame Endstufe (10; 18, 19) und ein Umschalter (9) vorgesehen sind.

9. System nach Anspruch 8, *dadurch gekennzeichnet,* dass der Umschalter (9) ein Relais ist.

10. System nach Anspruch 8, dadurch gekennzeichnet, dass die gemeinsame Endstufe (10) aus zwei gegenphasig angesteuerten Gegentaktleistungsstufen (18, 19) besteht.

11. System nach Anspruch 7, *dadurch gekennzeichnet,* dass die Stellglieder (11, 12) je einen Gleichstrommotor (20, 21) und ein Potentiometer (23, 24) aufweisen.

12. System nach Anspruch 1, *dadurch gekennzeichnet,* dass das Stellglied (11) für die Leistung der Brennkraftmaschine durch Federkraft in der Leerlaufstellung gehalten wird, wenn ihm keine elektrische Spannung zugeführt wird, und dass das Stellglied (12) für das Wendegetriebe durch Federkraft in der jeweils vorhandenen Stellung gehalten wird, wenn ihm keine elektrische Spannung zugeführt wird.

## Claims

1. Propulsion control system, in particular of a boat propulsion which comprises an internal combustion engine and a reversing gear, with an operating element for setting the power and the direction of rotation, it being possible to switch the operating element from an area of the reversing gear corresponding to a first direction of rotation via a rest position into an area corresponding to a second direction of rotation, characterized in that the operating element (1) passes electric signals corresponding to the power and the direction of rotation to a control device (5) containing a microcomputer (6), in that, both for the power of the internal combustion engine and for the switching of the reversing gear, in each case an actuator (11, 12) is connected to the control device (5), and in that the control device (5) is designed in such a way that the switching of the reversing gear is only possible if the speed of the internal combustion engine is below a predetermined value.

2. System according to Claim 1, characterized in that the operating element (1) comprises a lever (2), the centre position of which is assigned to the idling of the internal combustion engine, in that, after passing through the centre position, the actuator (11) for the power is held firmly in the idling position and the switching of the reversing gear is delayed until the internal combustion engine has reached the idling speed, and in that, after the switching of the reversing gear, the actuator (11) for the power is brought into that position which corresponds to the position of the lever.

3. System according to Claim 2, characterized in that the delay in the switching of the reversing gear takes place for a predetermined time.

4. System according to Claim 2, characterized in that the delay of the switching of the reversing gear takes place for a time which is claculated by the micro-computer on the basis of the characteristics of the propulsion and of the speed before passing through the centre position.

5. System according to Claim 2, characterized in that the switching of the reversing gear is delayed until a tachometer generator assigned to the internal combustion engine has signalled reaching of the idling speed.

6. System according to Claim 1, characterized in that the operating element (1) contains a potentiometer (3) and the power and speed can be supplied to the control device (5) as magnitude and sign of a direct-current voltage.

7. System according to Claim 1, characterized in that the actuators (11, 12) are each coupled to a position sensor (23, 24), which signals the position of the respective actuator (11, 12) to the control device (5).

8. System according to Claim 1, characterized in that a joint output stage (10; 18, 19) and a change-over switch (9) are provided for both actuators (11, 12) in the control device (5).

9. System according to Claim 8, characterized in that the change-over switch (9) is a relay.

10. System according to Claim 8, characterized in that the joint output stage (10) consists of two push-pull power stages (18, 19) driven in phase opposition.

11. System according to Claim 7, characterized in that the actuators (11, 12) each have a direct-current motor (20, 21) and a potentiometer (23, 24).

12. System according to Claim 1, characterized in that the actuator (11) for the power of the internal combustion engine is held by spring force in the idling position if no electric voltage is supplied to it, and in that the actuator (12) for the reversing gear is held by spring force in whichever position it is in if no electric voltage is supplied to it.

**Revendications**

1. Système de commande d'un dispositif de propulsion, en particulier d'un dispositif de propulsion de bateau, qui comprend un moteur à combustion et un système d'engrenages à renversement de sens de marche, comportant un élément de manœuvre pour le réglage de la puissance et du sens de rotation, l'élément de manœuvre pouvant être poussé d'une zone correspondant à un premier sens de rotation du système d'engrenages à renversement de sens de marche, en passant par une position de repos, dans une zone correspondant à un deuxième sens de rotation, système caractérisé en ce que l'élément (1) de manœuvre envoie des signaux électriques correspondant à la puissance et au sens de rotation sur un dispositif de commande (5) contenant un microprocesseur (6); en ce que des organes (11, 12) de réglage sont reliés au dispositif de commande (5), l'un pour la puissance du moteur à combustion, l'autre pour le renversement du sens de marche du système d'engrenages; et en ce que le dispositif de commande (5) est conformé de façon que le renversement du sens de la marche du système d'engrenages n'est possible que si la vitesse de rotation du moteur à combustion est inférieure à une valeur fixée à l'avance.

2. Système selon la revendication 1, caractérisé en ce que l'élément (1) de manœuvre comprend un levier (2) dont la position moyenne est affectée à la marche à vide (ou ralenti) du moteur à combustion; en ce qu'après le passage de la position moyenne, l'organe (11) de réglage de la puissance est maintenu dans la position de marche à vide et le renversement de sens de la marche du système d'engrenages est retardé jusqu'à ce que le moteur à combustion ait atteint la vitesse de rotation de marche à vide; et en ce qu'après le renversement de sens de la marche du système d'engrenages, l'organe (1) de réglage de la puissance est amené dans la position qui correspond à la position du levier.

3. Système selon la revendication 2, caractérisé en ce que le retard du renversement de sens de la marche du système d'engrenages correspond à un temps fixé à l'avance.

4. Système selon la revendication 2, caractérisé en ce que le retard du renversement de sens de la marche du système d'engrenages correspond à un temps qui est calculé par le microprocesseur, sur la base des caractéristiques du dispositif de propulsion et de la vitesse de rotation existant avant le passage de la position moyenne.

5. Système selon la revendication 2, caractérisé en ce que le renversement de sens de la marche du système d'engrenages est retardé jusqu'à ce qu'un capteur de vitesse de rotation, affecté au moteur à combustion, ait annoncé que la vitesse de rotation de marche à vide a été atteinte.

6. Système selon la revendication 1, caractérisé en ce que l'élément (1) de manœuvre contient un potentiomètre (3) et en ce que les valeurs de la puissance et la vitesse de rotation peuvent être délivrées au dispositif de commande (5) sous la forme d'une quantité et d'un signe d'une tension de courant continu.

7. Système selon la revendication 1, caractérisé en ce que les organes (11, 12) de réglage sont couplés chacun avec un capteur (23, 24) de position qui annonce au dispositif de commande (5) la position de l'organe (11, 12) de réglage considéré.

8. Système selon la revendication 1, caractérisé en ce qu'un étage terminal (10; 18, 19) commun et un commutateur (9) sont prévus dans le dispositif de commande (5) pour les deux organes (11, 12) de réglage.

9. Système selon la revendication 8, caractérisé en ce que le commutateur (9) est un relais.

10. Système selon la revendication 8, caractérisé en ce que l'étage terminal (10) commun est constitué par deux étages de puissance (18, 19) symétriques commandés en opposition de phase ou à contretemps.

11. Système selon la revendication 7, caractérisé en ce que les organes (11, 12) de réglage présentent chacun un moteur (20, 21) à courant continu et un potentiomètre (23, 24).

12. Système selon la revendication 1, caractérisé en ce que l'organe (11) de réglage de la puissance du moteur à combustion est maintenu, par la force d'un ressort, dans la position de marche à vide quand il ne reçoit aucune tension électrique et en ce que l'organe (12) de réglage du système d'engrenages à renversement de sens de la marche est maintenu, par la force d'un ressort, dans la position où il se trouve s'il ne reçoit aucune tension électrique.

FIG. 1

VLrw  LL  VLvw

Drosselklappe
(Einspritzpumpe)

Wendegetriebe

0 203 273

FIG. 2

FIG. 3

0 203 273